# EUROPEAN PATENT APPLICATION

(11) **EP 4 173 693 A1**
(43) Date of publication of application: **03.05.2023**
(21) Application number: 22203988.5
(22) Date of filing: 27.10.2022
(51) Int. Cl.: B01D 53/94, B01J 23/63, B01J 35/00, B01J 29/68, B01J 29/76, F01N 3/10, B01J 37/02

(54) **CATALYSTS FOR GASOLINE EXHAUST GAS TREATMENTS WITH IMPROVED AMMONIA EMISSION CONTROL**

(30) Priority: 02.11.2021 US 202163263390 P; 28.09.2022 US 202263377415 P
(71) Applicant: Johnson Matthey Public Limited Company, London EC4A 4AB (GB)
(72) Inventor: CHANDLER, Guy Richard, Royston, SG8 5HE (GB); CONTE, Sean, Sakura-shi, 329-1412 (JP); HOWARD, Michael, Wayne, 19087 (US); NAGAOKA, Shuhei, Sakura-shi, 329-1412 (JP); POWELL, Alexis, Royston, SG8 5HE (GB); ZHANG, Xiaorui, Sakura-shi, 329-1412 (JP); FERRAND, Vincent, Royston, SG8 5HE (GB)
(74) Representative: Wilson, Nicola Ann

(57) **Abstract**

A three-way catalyst article with improved ammonia emission control, and its use in an exhaust system for gasoline engines, is disclosed. The catalyst article for treating exhaust gas from a gasoline engine comprising: a substrate comprising an inlet end, an outlet end with an axial length L; a first catalytic region beginning at the inlet end, wherein the first catalytic region comprises a first zeolite; and a second catalytic region beginning at the outlet end, wherein the second catalytic region comprises a second platinum group metal (PGM) component, a second oxygen storage capacity (OSC) material, and a second inorganic oxide; wherein the second PGM component is selected from the group consisting of palladium, platinum, rhodium and a combination thereof.

## Description

### FIELD OF THE INVENTION

The present invention relates to a catalyzed article useful in treating exhaust gas emissions from gasoline engines.

### BACKGROUND OF THE INVENTION

Internal combustion engines produce exhaust gases containing a variety of pollutants, including hydrocarbons (HCs), carbon monoxide (CO), and nitrogen oxides ("NOₓ"). Emission control systems, including exhaust gas catalytic conversion catalysts, are widely utilized to reduce the amount of these pollutants emitted to atmosphere. A commonly used catalyst for gasoline engine exhaust treatments is the TWC (three-way catalyst). TWCs perform three main functions: (1) oxidation of CO; (2) oxidation of unburnt HCs; and (3) reduction of NOₓ. However, ammonia (NH₃) has been recognized as a by-product when using TWC to reduce NOₓ. Thus, NH₃ brings new pollutant emission problems, such as secondary inorganic aerosols formation, which can lead to degradation of air quality. Future emissions control legislation is expected to limit the emissions of NH₃ from gasoline engines.

To meet future regulation and to get NH₃ emission under control, others have attempted to use an ammonia slip catalyst (ASC), which is a typical emission control approach in heavy duty diesel (HDD) aftertreatment system. However, due to different compositions in fuel sources (diesel vs. gasoline) and different operating conditions (lean vs. stoichiometric), a typical ASC design does not quite work for NH₃ emission control over a stoichiometric gasoline engine. Thus, there remains a need for an improved NH₃ emission control catalyst that is specifically designed to treat exhaust gas emission from a stoichiometric gasoline engine.

### SUMMARY OF THE INVENTION

One aspect of the present disclosure is directed to a catalyst article for treating exhaust gas from a gasoline engine comprising: a substrate comprising an inlet end, an outlet end with an axial length L; a first catalytic region beginning at the inlet end, wherein the first catalytic region comprises a first zeolite; and a second catalytic region beginning at the outlet end, wherein the second catalytic region comprises a second platinum group metal (PGM) component, a second oxygen storage capacity (OSC) material, and a second inorganic oxide; wherein the second PGM component is selected from the group consisting of palladium, platinum, rhodium and a combination thereof.

The invention also encompasses an exhaust system for gasoline engines that comprises the catalyst article of the invention.

The invention also encompasses treating an exhaust gas from a gasoline engine. The method comprises contacting the exhaust gas with the catalyst article of the invention.

### BRIEF DESCRIPTION OF THE DRAWINGS

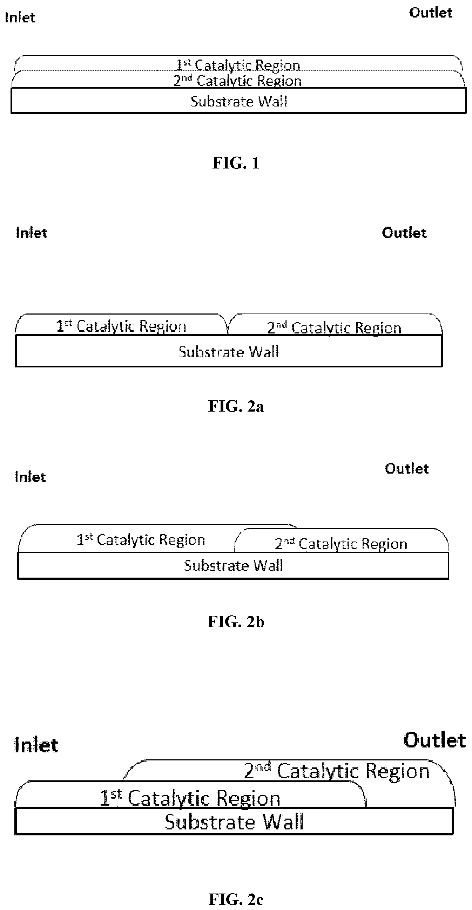

**FIG. 1** shows one embodiment according to the present invention, where the first catalytic region extends 100% of the axial length L, as top layer; the second catalytic region extends 100% of the axial length L, as bottom layer.
**FIG. 2a** shows one embodiment according to the present invention, the first catalytic region extends less than 100% of the axial length L, from the inlet end; the second catalytic region extends less than 100% of the axial length L, from the outlet end. The total length of the second and the first catalytic region is equal to the axial length L.
**FIG. 2b** shows one embodiment according to the present invention, the first catalytic region extends less than 100% of the axial length L, from the inlet end; the second catalytic region extends 100% of the axial length L, from the outlet end. The total length of the second and the first catalytic region is greater than the axial length L.
**FIG. 2c** shows one embodiment according to the present invention, the first catalytic region extends less than 100% of the axial length L, from the inlet end; the second catalytic region extends 100% of the axial length L, from the outlet end. The total length of the second and the first catalytic region is greater than the axial length L.

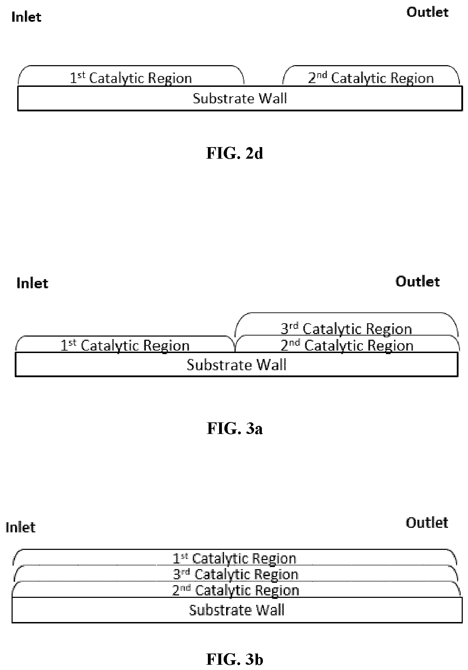

**FIG. 2d** shows one embodiment according to the present invention, the first catalytic region extends less than 100% of the axial length L, from the inlet end; the second catalytic region extends less than 100% of the axial length L, from the outlet end. The total length of the second and the first catalytic region is less than the axial length L.
**FIG. 3a** shows one embodiment according to the present invention, the first catalytic region extends less than 100% of the axial length L, from the inlet end; the second catalytic region extends less than 100% of the axial length L, from the outlet end. The total length of the second and the first catalytic region is equal to the axial length L. The 3^{rd} catalytic region extends less than 100% of the axial length L, from the outlet end.
**FIG. 3b** shows one embodiment according to the present invention, where the first catalytic region extends 100% of the axial length L, as top layer; the second catalytic region extends 100% of the axial length L, as bottom layer; and the third catalytic region extends 100% of the axial length L, as middle layer.

### DETAILED DESCRIPTION OF THE INVENTION

The present invention is directed to catalytic treatment of exhaust gas, such as that produced by stoichiometric gasoline engines, and to related catalytic articles and systems. More specifically, the invention relates the suppression of ammonia emission and simultaneous treatment of NOₓ, CO, HC in a vehicular exhaust system.

One aspect of the present disclosure is directed to a catalyst article for treating exhaust gas from a gasoline engine comprising: a substrate comprising an inlet end, an outlet end with an axial length L; a first catalytic region beginning at the inlet end, wherein the first catalytic region comprises a first zeolite; and a second catalytic region beginning at the outlet end, wherein the second catalytic region comprises a second platinum group metal (PGM) component, a second oxygen storage capacity (OSC) material, and a second inorganic oxide; wherein the second PGM component is selected from the group consisting of palladium, platinum, rhodium and a combination thereof.

### First Catalytic Region

The first zeolite can be a silica-containing zeolite such as a siliceous zeolite, and it also may be referred to an aluminosilicate zeolite, a metal-substituted aluminosilicate zeolite, an aluminophosphate (AIPO) zeolite, a metal-substituted (MeAIPO) zeolite, a silico-aluminophosphate (SAPO), or a metal-substituted silico-aluminophosphate (MeAPSO), or a modified zeolite by Zr, P. It is preferred that the zeolite is an aluminosilicate or silico-aluminophosphate (SAPO) zeolite. More preferably, the zeolite is aluminosilicate.

The zeolite may be microporous or microporous zeolite, and it is preferably the zeolite has a framework type selected from the group of consisting of ACO, AEI, AEN, AFN, AFT, AFX, ANA, APC, APD, AST, ASV, ATT, BCT, BEA, BEC, BOF, BOG, BRE, CAN, CDO, CFI, CGS, CHA, CHI, CON, DAC, DDR, DFT, EAB, EDI, EPI, ERI, FER, GIS, GOD, IHW, ITE, ITW, LEV, KFI, MER, MFI, MON, NSI, OWE, PAU, PHI, RHO, RTH, SAT, SAV, SIV, THO, TSC, UEI, UFI, VNI, YUG, ZON. Each of the aforementioned three-letter codes represents a framework type in accordance with the "IUPAC Commission on zeolite Nomenclature" and/ or the structure Commission of the international Zeolite Association. More preferably, the first zeolite has a framework type selected from AEI, BEA, CHA, FER, FAU, MFA, or LEV. In some embodiments, the first zeolite can be AEI, BEA, FER, LEV, or CHA. In further embodiments, the first zeolite can be LEV, FER, CHA, or AEI. In yet further embodiment, the first zeolite can be FER, AEI, or CHA. In another further embodiment, the first zeolite can be FER. In another further embodiment, the first zeolite can be AEI. In another further embodiment, the first zeolite can be CHA. In general, the first zeolite may have a silica-to-alumina ratio (SAR) of from 2 to 500, preferably from 4 to 250, and more preferably from 8-150. In some embodiments, the first zeolite is FER or CHA or AEI with SAR range of 8-40. In further embodiments, the first zeolite is FER or CHA or AEI with SAR range of 10-30.

In certain embodiments, the first catalytic region can further comprise a first transition metal may be selected from the group consisting of Fe, Cu, Co, Mn, Ni, Zn, Ce, Mo, Ag, and a combination of any two or more. In further embodiments, the first transition metal can be selected from Ce, Mn, Cu, Co, Ni or Fe, and a combination of any two or more. In yet other embodiments, the first transition metal can be Cu and/or Fe. In certain embodiments, the first transition metal is 0.01-20 wt.%; preferably, 0.1-15% wt.%; more preferably, 0.5-10% wt.%, based on the weight of the first zeolite; even more preferably, 1-9% wt.% or 2-8% wt.%, based on the weight of the first zeolite.

In certain embodiments, the first catalytic region can extend for 100% of the axial length L. In other embodiments, the first catalytic region can extend for 30-90%, 40-80%, or 40-60% of the axial length L. Alternatively, the first catalytic region can extend for 30-80% or 30-70% of the axial length L.

The total washcoat loading of the first catalytic region can be less than 3.5 g/in³, preferably, less than 3.0 g/in³ or 2.5 g/in³. Alternatively, the total washcoat loading of the first catalytic region can be from 0.5 to 3.5 g/in³; preferably, can be from 0.6 to 3 g/in³ or 0.7 to 2.8 g/in³.

### Second Catalytic Region

In some embodiments, the second PGM component can be Pd and Rh. In other embodiments, the second PGM component can be Pt and Rh. In yet another embodiment, the second PGM component can be Pt.

The second OSC material can be cerium oxide, zirconium oxide, a ceria-zirconia mixed oxide, an alumina-ceria-zirconia mixed oxide, or a combination thereof. More preferably, the second OSC material comprises the ceria-zirconia mixed oxide, the alumina-ceria-zirconia mixed oxide, or a combination thereof. In addition, the second OSC material may further comprise one or more of dopants like lanthanum, neodymium, praseodymium, yttrium *etc.* Moreover, the second OSC material may have the function as a support material for the second PGM component. In some embodiments, the second OSC material comprises the ceria-zirconia mixed oxide and the alumina-ceria-zirconia mixed oxide.

The ceria-zirconia mixed oxide can have a weight ratio of zirconia dioxide to ceria dioxide at least 50:50, preferably, higher than 60:40, more preferably, higher than 65:35. Alternatively, the ceria-zirconia mixed oxide also can have a weight ratio of ceria dioxide to zirconia dioxide less than 50:50, preferably, less than 40:60, more preferably, less than 35:65.

The second OSC material (e.g., ceria-zirconia mixed oxide) can be from 10 to 90 wt.%, preferably, 20-90 wt.%, more preferably, 30-90 wt.%, based on the total washcoat loading of the second catalytic region.

The second OSC material loading in the second catalytic region can be less than 2 g/in³. In some embodiments, the second OSC material loading in the second catalytic region is no greater than 2 g/in³, 1.5 g/in³, 1.2 g/in³, 1.0 g/in³, or 0.8 g/in³.

The second inorganic oxide is preferably an oxide of Groups 2, 3, 4, 5, 13 and 14 elements. The second inorganic oxide is preferably selected from the group consisting of alumina, zirconia, magnesia, silica, lanthanum, yttrium, neodymium, praseodymium oxides, and mixed oxides or composite oxides thereof. Particularly preferably, the second inorganic oxide is alumina, lanthanum-alumina, zirconia, or a magnesia/alumina composite oxide. One especially preferred second inorganic oxide is alumina or lanthanum-alumina.

The second OSC material and the second inorganic oxide can have a weight ratio of no greater than 10:1, preferably, no greater than 8:1, more preferably, no greater than 5:1, most preferably, no greater than 4:1.

Alternatively, the second OSC material and the second inorganic oxide can have a weight ratio of 10:1 to 1:10, preferably, 8:1 to 1:8; more preferably, 5:1 to 1:5; and most preferably, 4:1 to 1:4.

In some embodiments, the second catalytic region can further comprise a second alkali or alkaline earth metal.

The second alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the second catalytic region.

Preferably the barium or strontium is present as BaCO₃ or SrCO₃. Such a material can be performed by any method known in the art, for example incipient wetness impregnation or spray-drying.

In some embodiments, the second catalytic region is substantially free of the second alkali or alkaline earth metal. In further embodiments, the second catalytic region is substantially free of, or does not comprise, the second alkali or alkaline earth metal.

In certain embodiments, the first catalytic region can extend for 100% of the axial length L. In other embodiments, the second catalytic region can extend for 30 to 90%, 40 to 80%, or 40-70% of the axial length L. Alternatively, the second catalytic region can extend for 40 to 90 percent of the axial length L; preferably, 45 to 60 percent of the axial length L. Alternatively, the second catalytic region can be no greater than 90%, 85%, 80%, or 75% of the axial length L.

In some embodiments, the second catalytic region can overlap with the first catalytic region. In further embodiments, the second catalytic region can overlap with the first catalytic region for 5 to 40 percent of the axial length L. Preferably, the total length of the second region and the first region is equal or greater than the axial length L. In certain embodiments, the total length of the first catalytic region and the second catalytic region equals to 100% L. In other embodiments, the total length of the first catalytic region and the second catalytic region is less than 100% L, for example, no greater than 99%, 95%, 85%, or 80% of the axial length L.

In certain embodiments, the second catalytic region can be supported/deposited directly on the substrate.

The total washcoat loading of the second catalytic region can be less than 3.5 g/in³, preferably, less than 3.0 g/in³ or 2.5 g/in³. Alternatively, the total washcoat loading of the second catalytic region can be from 0.5 to 3.5 g/in³; preferably, can be from 0.6 to 3.5 g/in³ or 0.7 to 3.0 g/in³.

### Third Catalytic Region

The catalytic article may further comprise a third catalytic region. In some embodiments, the third catalytic region can begin at the outlet end. In further embodiments, the third catalytic regions can extend for the axial length L. In other embodiments, the third catalytic regions can extend for less than 100% of the axial length L.

The third catalytic region can further comprise a third PGM component, a third oxygen storage capacity (OSC) material, a third alkali or alkaline earth metal component, and/or a third inorganic oxide.

The third PGM component can be selected from the group consisting of platinum, palladium, rhodium, and a mixture thereof. In some embodiments, the third PGM component can be palladium, rhodium or a mixture thereof. In another embodiments, the third PGM component can be platinum, rhodium or a mixture thereof.

The third OSC material can be cerium oxide, zirconium oxide, a ceria-zirconia mixed oxide, an alumina-ceria-zirconia mixed oxide, or a combination thereof. More preferably, the third OSC material comprises the ceria-zirconia mixed oxide, the alumina-ceria-zirconia mixed oxide, or a combination thereof. In addition, the third OSC material may further comprise one or more of dopants like lanthanum, neodymium, praseodymium, yttrium *etc.* Moreover, the third OSC material may have the function as a support material for the third PGM component. In some embodiments, the third OSC material comprises the ceria-zirconia mixed oxide and the alumina-ceria-zirconia mixed oxide.

The ceria-zirconia mixed oxide can have a weight ratio of zirconia dioxide to ceria dioxide at least 50:50, preferably, higher than 60:40, more preferably, higher than 65:35. Alternatively, the ceria-zirconia mixed oxide also can have a weight ratio of ceria dioxide to zirconia dioxide less than 50:50, preferably, less than 40:60, more preferably, less than 35:65.

The third OSC material (e.g., ceria-zirconia mixed oxide) can be from 10 to 90 wt.%, preferably, 25-75 wt.%, more preferably, 30-60 wt.%, based on the total washcoat loading of the third catalytic region.

The third OSC material loading in the third catalytic region can be less than 2 g/in³. In some embodiments, the third OSC material loading in the second catalytic region is no greater than 2.0 g/in³, 1.5 g/in³, 1.2 g/in³, 1.0 g/in³, or 0.8 g/in³.

The total washcoat loading of the third catalytic region can be less than 3.5 g/in³, preferably, no more than 3.0 g/in³, 2.5 g/in³, or 2 g/in³.

The third alkali or alkaline earth metal is preferably barium, strontium, mixed oxides or composite oxides thereof. Preferably the barium or strontium, where present, is in an amount of 0.1 to 15 wt.%, and more preferably 3 to 10 wt.% of barium or strontium, based on the total weight of the third catalytic region.

It is even more preferable that the third alkali or alkaline earth metal is barium. The barium, where present, is preferably present in an amount of 0.1 to 15 wt.%, and more preferably 3 to 10 wt.%, based on the total weight of the third catalytic region.

It is also preferable that the third alkali or alkaline earth metal is mixed oxides or composite oxide of barium and strontium. Preferably, the mixed oxides or composite oxide of barium and strontium is present in an amount of 0.1 to 15 wt.%, and more preferably 3 to 10 wt.%, based on the total weight of the third catalytic region. It is more preferable that the third alkali or alkaline earth metal is composite oxide of barium and strontium.

Preferably the barium or strontium is present as BaCO₃ or SrCO₃. Such a material can be performed by any method known in the art, for example incipient wetness impregnation or spray-drying.

In some embodiments, the third catalytic region is substantially free of the third alkali or alkaline earth metal. In further embodiments, the third catalytic region is substantially free of, or does not comprise, the third alkali or alkaline earth metal.

The third inorganic oxide is preferably an oxide of Groups 2, 3, 4, 5, 13 and 14 elements. The third inorganic oxide is preferably selected from the group consisting of alumina, zirconia, magnesia, silica, lanthanum, neodymium, praseodymium, yttrium oxides, and mixed oxides or composite oxides thereof. Particularly preferably, the third inorganic oxide is alumina, lanthanum-alumina, zirconia, or a magnesia/alumina composite oxide. One especially preferred third inorganic oxide is alumina or lanthanum-alumina.

The third OSC material and the third inorganic oxide can have a weight ratio of no greater than 10:1, preferably, no greater than 8:1 or 5:1, more preferably, no greater than or 5:1, most preferably, no greater than 4:1.

Alternatively, the third OSC material and the third inorganic oxide can have a weight ratio of 10:1 to 1:10, preferably, 8:1 to 1:8; or, more preferably, 5:1 to 1:5 or; and most preferably, 4:1 to 1:4.

The third catalytic region can extend for 100 percent of the axial length L (*e.g., see* **FIG. 3b**). Alternatively, the third catalytic region can be less than the axial length L, for example, no greater than 95%, 90%, 80%, or 70% of the axial length L (*e.g., see* **FIG. 3a**)**.**

### Substrate

Preferably the substrate is a flow-through monolith.

The substrate can be less than 8 inches in length, preferably from 2 to 6 inches.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g., the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (*i.e.,* a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metalloid aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminum in addition to other trace metals.

In some embodiments, the first catalytic region can be located on a different substrate than the second (or optionally the third) catalytic region.

Another aspect of the present disclosure is directed to a method for treating a vehicular exhaust gas from a gasoline engine containing NOₓ, CO, HC, and ammonia using the catalyst article described herein. The testing catalysts made according to this invention showed significantly improved NH₃ control performance compared to with conventional TWC (*e.g., see* Example 4; and **Tables 9 and 10**)**.**

Another aspect of the present disclosure is directed to a system for treating vehicular exhaust gas comprising the catalyst article described herein in conjunction with a conduit for transferring the exhaust gas through the system.

In some embodiments, the system can further comprise a TWC article. In further embodiments, the TWC article is upstream of the catalyst article of the first aspect. In certain embodiments, the upstream TWC article and the catalyst article of the first aspect can be on different substrates. In other embodiments, the upstream TWC article and the catalyst article of the first aspect can be on the same substrate.

### DEFINTIONS

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as ≤ 75 % of the total length of the substrate. A "zone" typically has a length (i.e. a substantially uniform length) of at least 5% (e.g. ≥ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:
(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.
Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.

Similarly, any reference to a "zone disposed at an outlet end of the substrate" when the substrate is a wall-flow filter refers to a zone disposed or supported on the substrate that is:
(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.

A zone may satisfy both (a) and (b) when the washcoat is present in the wall of the wall-flow filter (i.e. the zone is in-wall).

The term "washcoat" is well known in the art and refers to an adherent coating that is applied to a substrate usually during production of a catalyst.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The expression "consist essentially" as used herein limits the scope of a feature to include the specified materials or steps, and any other materials or steps that do not materially affect the basic characteristics of that feature, such as for example minor impurities. The expression "consist essentially of' embraces the expression "consisting of".

The expression "substantially free of' as used herein with reference to a material, typically in the context of the content of a region, a layer or a zone, means that the material in a minor amount, such as ≤ 5 % by weight, preferably ≤ 2 % by weight, more preferably ≤ 1 % by weight. The expression "substantially free of' embraces the expression "does not comprise."

The expression "essentially free of' as used herein with reference to a material, typically in the context of the content of a region, a layer or a zone, means that the material in a trace amount, such as ≤ 1 % by weight, preferably ≤ 0.5 % by weight, more preferably ≤ 0.1 % by weight. The expression "essentially free of' embraces the expression "does not comprise."

Any reference to an amount of dopant, particularly a total amount, expressed as a % by weight as used herein refers to the weight of the support material or the refractory metal oxide thereof.

The term "loading" as used herein refers to a measurement in units of g/ft³ on a metal weight basis.

The following examples merely illustrate the invention. Those skilled in the art will recognize many variations that are within the spirit of the invention and scope of the claims.

### EXAMPLES

### Materials

All materials are commercially available and were obtained from the known suppliers, unless noted otherwise.

### Catalyst A

A catalyst with a single layer was prepared. The layer consists of Fe, which supported on a FER type of zeolite with SAR range ~ 17 and binder, the total washcoat loading of the single layer was about 1.6 g/in³ with Fe loading of about 3 wt.% (based on the weight of FER).

The washcoat was coated on a ceramic substrate (400 cpsi, 4 mil wall thickness) using standard coating procedures.

### Catalyst B

A catalyst with a single layer was prepared. The layer consists of an AEI type of zeolite with SAR range ~ 20 and binder, the total washcoat loading of the single layer was about 1.6 g/in³.

The washcoat was coated on a ceramic substrate (400 cpsi, 4 mil wall thickness) using standard coating procedures.

### Catalyst C

A catalyst with a single layer was prepared. The layer consists of Cu, which supported on an AEI type of zeolite with SAR range ~ 20 and binder, the total washcoat loading of the single layer was about 1.6 g/in³ with Cu loading of about 2 wt.% (based on the weight of AEI).

The washcoat was coated on a ceramic substrate (400 cpsi, 4 mil wall thickness) using standard coating procedures.

### Catalyst D

A catalyst with a single layer was prepared. The layer consists of Cu, which supported on an AEI type of zeolite with SAR range ~ 17 and binder, the total washcoat loading of the single layer was about 1.6 g/in³ with Cu loading of about 4 wt.% (based on the weight of AEI).

The washcoat was coated on a ceramic substrate (400 cpsi, 4 mil wall thickness) using standard coating procedures.

### EXAMPLE 1-NH₃ STORAGE TEST

Catalysts A-D were aged under hydrocarbon (HC) redox conditions as shown in **Table 1** at 850 °C for 4 hours.

**Table 1 HC Redox Aging Conditions**

| | |
|---|---|
| **Perturbation Cycle** | 80s [Rich λ=0.98], 20s [Lean] |
| **Rich Gas Condition** | 0.25% C₃H₆, 1.0% O₂, 10.0% H₂O, N₂ Balance |
| **Lean Gas Condition** | 21% O₂, 10% H₂O, N₂ Balance |
| **Flow Rate** | 2.0 L/min |

After HC redox aging, Catalysts A-D were tested for their NH₃ storage performance under testing protocol as shown in **Table 2.**

**Table 2 NH₃ Storage Testing Protocol**

| | |
|---|---|
| **Precondition** | Increase temperature to 500 °C at 25 °C/min under N₂ gas |
| **Pre-Storage** | Decrease temperature to 150 °C and hold for 3 min under N₂ gas |
| **Storage** | Flow gas with 1000 ppm NH₃, 10% H₂O, N₂ balance for 10 min |

As shown in **Table 3** below, while Catalyst B demonstrate its NH₃ storage capacity, Catalysts A, C, and D showed superior/improved NH₃ storage capacity when compared with Catalyst B.

**Table 3 NH₃ Storage Testing for Aged Catalysts A-D**

| | **NH₃ Storage Capacity Grams per liter of catalyst volume** |
|---|---|
| **Catalyst A** | 0.71 |
| **Catalyst B** | 0.41 |
| **Catalyst C** | 1.14 |
| **Catalyst D** | 1.45 |

### EXAMPLE 2-HOT NH₃ CONVERSION WITH STOICH NH₃ FEED

After HC redox aging, Catalysts A-D were tested for their hot NH₃ conversion performance under testing protocol as shown in **Table 4.**

**Table 4 Hot NH₃ Test Protocol with STOICH NH₃ FEED**

| | |
|---|---|
| **Precondition** | Increase temperature to 400 °C at 25 °C/min under 20% O₂, N₂ Balance Hold for 3 min under the same gas condition and temperature Switch gas to N₂ and keep for 5min |
| **Hot NH₃ Test** | Switching Gas Condition: |
| | 1) 20% O₂, N₂ Balance for 30s |
| | 2) N₂ for 15s |
| | 3) NH₃ Feed (λ=1) 1000ppm NH₃, 500ppmC C₃H₆, 15% CO₂, 10% H₂O, N₂ Balance for 20s |
| | 4) N₂ for 15s |
| | 5) NO Feed (λ=1.03) 1000ppm NO, 0.6% O₂, 15% CO₂, 10% H₂O, N₂ Balance for 20s |
| | 6) N₂ for 5min |
| | 7) Repeat test cycle multiple times: NH₃ and NO conversions are calculated (average) |

As shown in **Table 5** below, Catalysts A, C, and D demonstrated good NH₃ and NO conversions under stoichiometric feed conditions.

**Table 5 Hot NH₃ Conversion Testing for Aged Catalysts A-D**

| | **NH₃ Conversion (%)** | **NO Conversion (%)** |
|---|---|---|
| **Catalyst A** | 23 | 27 |
| **Catalyst B** | 0 | 5 |
| **Catalyst C** | 74 | 69 |
| **Catalyst D** | 95 | 74 |

### EXAMPLE 3-HOT NH₃ CONVERSION WITH RICH NH₃ FEED

Catalysts A and D were aged under different conditions as shown in **Table 6** at 850 °C for 4 hours.

**Table 6 Aging Conditions**

| | |
|---|---|
| **Perturbation Cycle** | 5 min [Stoich], 1 min [Lean] |
| **Stoich Gas Condition** | 10% H₂O, N₂ Balance |
| **Lean Gas Condition** | 20% O₂, 10% H₂O, N₂ Balance |
| **Flow Rate** | 3 L/min |

After aging, Catalysts A and D were tested for their hot NH₃ conversion performance under testing protocol as shown in **Table 7.**

**Table 7 Hot NH₃ Test Protocol with RICH NH₃ FEED**

| | |
|---|---|
| **Precondition** | Increase temperature to 400 °C at 25 °C/min under 20% O₂, N₂ Balance Hold for 3 min under the same gas condition and temperature Switch gas to N₂ and keep for 5min |
| **Hot NH₃ Test** | Switching Gas Condition: |
| | 1) 20% O₂, N₂ Balance for 30s |
| | 2) N₂ for 15s |
| | 3) NH3 Feed (λ=0.92) 1000ppm NH₃, 1260ppmC C₃H₆, 2.4% CO, 15% CO₂, 10% H₂O, N₂ Balance for 20s |
| | 4) N₂ for 15s |
| | 5) NO Feed (λ=1) 1000ppm NO, 1260ppmC C₃H₆, 0.6% O₂, 1% CO, 15% CO₂, 10% H₂O, N₂ Balance for 20s |
| | 6) N₂ for 5min |
| | 7) Repeat test cycle multiple times: NH₃ and NO conversions are calculated (average) |

As shown in **Table 8** below, Catalysts A and D demonstrated good NH₃ and NO conversions under rich feed conditions.

**Table 8 Hot NH₃ Conversion Testing for Aged Catalysts A and D**

| | **NH₃ Conversion (%)** | **NO Conversion (%)** |
|---|---|---|
| **Catalyst A** | 18 | 13 |
| **Catalyst D** | 96 | 39 |

### TWC-1

TWC-1 is a typical three-way (Pd-Rh) catalyst with a double-layered structure in two catalytic regions as shown in **FIG. 1****.** Bottom layer consists of Pd supported on a washcoat of a first CeZr mixed oxide, La-stabilized alumina, Ba promotor. The washcoat loading of the bottom layer was about 2.0 g/in³ with a Pd loading of 16 g/ft³. The washcoat was coated from each end face of a ceramic substrate (400 cpsi, 4.3 mil wall thickness) using standard coating procedures with coating depth targeted of 50% of the substrate length, dried at 100 °C and calcined at 500 °C for 45mins.

Top layer consists of Rh supported on a washcoat of a second CeZr mixed oxide, La-stabilized alumina. The washcoat loading of the second layer was about 1.5 g/in³ with a Rh loading of 4 g/ft³. This second washcoat was then coated from each end face of the ceramic substrate containing the bottom layer from above, using standard coating procedures with coating depth targeted of 50% of the substrate length, dried at 100 °C and calcined at 500 °C for 45mins.

### TWC-2

TWC-2 is a typical three-way (Pd-Rh) catalyst with a single-layered structure. The catalyst layer consists of Pd and Rh supported on a washcoat of a first CeZr mixed oxide, La-stabilized alumina, Ba promotor. The washcoat loading of the layer was about 3.0 g/in³ with Pd loading of 2 g/ft³ and Rh loading of 8 g/ft³. The washcoat was coated from each end face of a ceramic substrate (400 cpsi, 4.3 mil wall thickness) using standard coating procedures with coating depth targeted of 50% of the substrate length, dried at 100 °C and calcined at 500 °C for 45 mins.

### Catalyst Article 1

A catalyst with two catalytic regions were prepared. *(E.g., see* **FIG. 2a**).

### First Catalytic Region

The first catalytic region consists of Fe, which supported on a FER type of zeolite with SAR range ~ 16-20 and binder, the total washcoat loading of this catalytic region was about 1.5 g/in³ with Fe loading of about 3 wt.% (based on the weight of FER).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

The washcoat of the second catalytic region consists of La-alumina, ceria-zirconia mixed oxide, platinum, rhodium (about 3.0 g/in³ with Pt loading of 6.7 g/ft³ and Rh loading of 3.3 g/ft³). The washcoat was coated from the outlet end face of the ceramic substrate containing the first catalytic region from above, using standard coating procedures with coating depth targeted of 50% of the substrate length.

The catalyst article was dried at 100 °C and calcined at 500 °C for 45 mins.

### Catalyst Article 2

A catalyst with two catalytic regions were prepared. *(E.g., see* **FIG. 2a**).

### First Catalytic Region

The first catalytic region consists of Fe, which supported on a FER type of zeolite with SAR range ~ 16-20 and binder, the total washcoat loading of this catalytic region was about 1.5 g/in³ with Fe loading of about 3 wt.% (based on the weight of FER).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

The washcoat of the second catalytic region consists of La-alumina, ceria-zirconia mixed oxide, platinum (about 3.0 g/in³ with Pt loading of 10 g/ft³). The washcoat was coated from the outlet end face of the ceramic substrate containing the first catalytic region from above, using standard coating procedures with coating depth targeted of 50% of the substrate length.

The catalyst article was dried at 100 °C and calcined at 500 °C for 45 mins.

### Catalyst Article 3

A catalyst with two catalytic regions were prepared. (*E.g., see* **FIG. 2a**).

### First Catalytic Region

The first catalytic region consists of Fe, which supported on a FER type of zeolite with SAR range ~ 16-20 and binder, the total washcoat loading of this catalytic region was about 1.5 g/in³ with Fe loading of about 3 wt.% (based on the weight of FER).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

The washcoat of the second catalytic region consists of La-alumina, ceria, platinum, rhodium (about 3.0 g/in³ with Pt loading of 6.7 g/ft³ and Rh loading of 3.3 g/ft³). The washcoat was coated from the outlet end face of the ceramic substrate containing the first catalytic region from above, using standard coating procedures with coating depth targeted of 50% of the substrate length.

The catalyst article was dried at 100 °C and calcined at 500 °C for 45 mins.

### Catalyst Article 4

A catalyst with two catalytic regions were prepared. (*E.g., see* **FIG. 1**).

### First Catalytic Region

The first catalytic region consists of Fe, which supported on a FER type of zeolite with SAR range ~ 16-20 and binder, the total washcoat loading of this catalytic region was about 1.5 g/in³ with Fe loading of about 3 wt.% (based on the weight of FER).

The washcoat of first catalytic region was coated from the both the inlet and outlet end face of a ceramic substrate (400 cpsi, 4.3 mil wall thickness) using standard coating procedures with coating depth targeted of 50% of the substrate length to give full coverage of the ceramic substrate.

### Second Catalytic Region

The washcoat of the second catalytic region consists of La-alumina, ceria-zirconia mixed oxide, platinum, rhodium (about 3.0 g/in³ with Pt loading of 6.7 g/ft³ and Rh loading of 3.3 g/ft³). The washcoat of second catalytic region was coated from the both the inlet and outlet end face of a ceramic substrate (400 cpsi, 4.3 mil wall thickness) using standard coating procedures with coating depth targeted of 50% of the substrate length to give full coverage of the ceramic substrate.

The catalyst article was dried at 100 °C and calcined at 500 °C for 45 mins.

Catalyst performance testing was carried out with a synthetic exhaust gas and Catalyst samples were aged at 800 °C for 10 hours in an 10% water, 5% O₂, balance N₂.

### Catalyst Article 5

A catalyst with two catalytic regions were prepared. (*E.g., see* **FIG. 2a**).

### First Catalytic Region

The first catalytic region consists of Cu, which supported on a CHA type of zeolite with SAR range ~ 16 and binder, the total washcoat loading of this catalytic region was about 1.5 g/in³ with Cu loading of about 3.3 wt.% (based on the weight of CHA).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

As described in Catalyst Article 2.

The catalyst article was dried at 100 °C and calcined at 500 °C for 45 mins.

### Catalyst Article 6

A catalyst with two catalytic regions were prepared. (*E.g., see* **FIG. 2a**).

### First Catalytic Region

The first catalytic region consists of Cu, which supported on an AEI type of zeolite with SAR range ~ 20 and binder, the total washcoat loading of this catalytic region was about 1.2 g/in³ with Cu loading of about 3.8 wt.% (based on the weight of AEI).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

As described in Catalyst Article 2.

The catalyst article was dried at 100 °C and calcined at 500 °C for 45 mins.

### Catalyst Article 7

A catalyst with two catalytic regions were prepared. (*E.g., see* **FIG. 2a**).

### First Catalytic Region

The first catalytic region consists of Cu, which supported on an AEI type of zeolite with SAR range ~ 20 and binder, the total washcoat loading of this catalytic region was about 1.5 g/in³ with Cu loading of about 3.8 wt.% (based on the weight of AEI).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

As described in Catalyst Article 2.

The catalyst article was dried at 100 °C and calcined at 500 °C for 45 mins.

### Catalyst Article 8

A catalyst with two catalytic regions were prepared. (*E.g., see* **FIG. 2a**).

### First Catalytic Region

The first catalytic region consists of Cu, which supported on an AEI type of zeolite with SAR range ~ 20 and binder, the total washcoat loading of this catalytic region was about 2.2 g/in³ with Cu loading of about 3.8 wt.% (based on the weight of AEI).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

As described in Catalyst Article 2.

The catalyst article was dried at 100 °C and calcined at 500 °C for 45 mins.

### Catalyst Article 9

A catalyst with two catalytic regions were prepared. (*E.g., see* **FIG. 2a**).

### First Catalytic Region

The first catalytic region consists of Cu, which supported on an AEI type of zeolite with SAR range ~ 20 and binder, the total washcoat loading of this catalytic region was about 2.8 g/in³ with Cu loading of about 3.8 wt.% (based on the weight of AEI).

The washcoat of first catalytic region was coated from the inlet end face of a ceramic substrate (400 cpsi, 4.3 mil wall thickness) using standard coating procedures with coating depth targeted of 50% of the substrate length.

### Second Catalytic Region

As described in Catalyst Article 2.

The catalyst article was dried at 100 °C and calcined at 500 °C for 45 mins.
Catalyst performance testing was carried out with a synthetic exhaust gas and Catalyst samples were aged at 800 °C for 10 hours in an 10% water, 5% O₂, balance N₂.

### NH₃ storage test:

A catalyst sample was heated to 150 °C and a gas feed of 400 ppm of NH₃, 10% water, balance N₂. The space velocity was 110k h⁻¹. The total amount of NH₃ stored at the point the catalyst was saturated with NH₃ was recorded.

### NH₃ oxidation test:

The catalyst sample saturated with NH₃ was heated from 100 °C to 500 °C at 50 °C per minute with a gas mixture of 300 ppm NH₃, 0.5% O₂, 300 ppm NO, balance N₂. The temperature at which NH₃ conversion reached 50% was recorded.

The catalyst performance results from TWC-2, Catalyst Articles 1-9 are shown in **Table 9.** The ammonia storage capacities of Catalyst Articles 1-4 are comparable and significantly higher than the TWC-2 technology. Catalyst Articles 6-9 show increasing Cu zeolite loading increases the amount of ammonia storage. The NH₃ oxidation light off for Catalyst Articles 1-9 are significantly lower than TWC-2. These results show that conventional TWC technology is not as effective and control NH₃ emissions as the Catalyst Articles 1-9.

**Table 9 NH₃ Storage and Oxidation from Synthetic Exhaust Testing**

| | NH₃ Storage Capacity Grams per liter of catalyst volume | NH₃ Oxidation Light Off Temperature, T₅₀ (°C) |
|---|---|---|
| TWC-2 | 0.12 | 501 |
| Catalyst Article 1 | 0.34 | 371 |
| Catalyst Article 2 | 0.35 | 290 |
| Catalyst Article 3 | 0.33 | 461 |
| Catalyst Article 4 | 0.36 | 375 |
| Catalyst Article 5 | 0.80 | 267 |
| Catalyst Article 6 | 0.74 | 275 |
| Catalyst Article 7 | 0.95 | 238 |
| Catalyst Article 8 | 1.37 | 301 |
| Catalyst Article 9 | 2.60 | 349 |

### EXAMPLE 4-IMPROVED CATALYST PERFORMANCE

The following Systems were tested for their catalytic performances with the layout of TWC-1 at upstream, and TWC-2 at downstream:
Comparative System 1: TWC-1 only
Comparative System 2: TWC-1 + TWC-2
System 3: TWC-1 + TWC-2 + Catalyst Article 2

Catalyst performance testing was carried out by on a gasoline vehicle under a Real Driving Emission (RDE) representative drive cycle. The RDE test was considered as a reliable way of emission evaluation for engine operation. The final RDE emission value is the sum of emissions divided by the distance driven. The vehicle used was a Euro 6d full certified vehicle with a 1.5 L turbo charged direct injection engine. The catalyst system was aged to represent end of useful life using a fuel cut aging cycle with a target inlet temperature for TWC-1 of 950 °C for 60 hours. The temperature of the catalysts downstream of TWC-1 during this aging was 830 °C.

The emission results on a gasoline vehicle under RDE cycle toward Comparative System 1 and Comparative System 2 were shown in **Table 10.** The results exhibited that NH₃ emission of Comparative Catalyst Systems 1 and 2 both failed to meet the anticipated European Light Duty NH₃ requirement of 10 mg/km. Therefore, Comparative Systems 1 and 2, using typical catalysts in gasoline applications, does not work for NH₃ emission requirements. The addition of Catalyst Article 2 of the present invention to System 3 (shown in **Table 10)** is effective at controlling NH₃ emissions to below the anticipated European requirement for light duty vehicles.

**Table 10 Emission results on a gasoline vehicle under RDE cycle**

| System | Catalyst Article Arrangement | Emissions on natural gas engine | | | |
|---|---|---|---|---|---|
| | | (g/km) | | | |
| | | CO/10 | THC | NOₓ | NH₃ |
| Comparative System 1 | TWC-1 only | 0.120 | 0.078 | 0.117 | **0.024** |
| Comparative System 2 | TWC-1 + TWC-2 | 0.034 | 0.045 | 0.037 | **0.012** |
| System 3 | TWC-1 + TWC-2 + Catalyst Article 2 | 0.031 | 0.036 | 0.035 | **0.005** |
| Anticipated European Light Duty Vehicle NH₃ Requirement | | - | - | - | **0.010** |

## Claims

1. A catalyst article for treating exhaust gas from a gasoline engine comprising:
a substrate comprising an inlet end, an outlet end with an axial length L;
a first catalytic region beginning at the inlet end, wherein the first catalytic region comprises a first zeolite; and
a second catalytic region beginning at the outlet end, wherein the second catalytic region comprises a second platinum group metal (PGM) component, a second oxygen storage capacity (OSC) material, and a second inorganic oxide;
wherein the second PGM component is selected from the group consisting of palladium, platinum, rhodium and a combination thereof.

2. The catalyst article of claim 1, wherein the first catalytic region extends for 30 to 90 percent of the axial length L.

3. The catalyst article of claim 1 or claim 2, wherein the second catalytic region extends for 30 to 90 percent of the axial length L.

4. The catalyst article of any one of the preceding claims, wherein the second catalytic region overlaps with the first catalytic region.

5. The catalyst article of any one of claims 1-3, wherein the second catalytic region does not overlap with the first catalytic region.

6. The catalyst article of any one of the preceding claims, wherein the first catalytic region further comprises a first transition metal selected from the group consisting of Fe, Cu, Mn, Co, Ni, Zn and a combination thereof.

7. The catalyst article of claim 6, wherein the first transition metal is Cu and/or Fe.

8. The catalyst article of claim 7, wherein Fe is 0.01-20 wt.%, based on the weight of the first zeolite.

9. The catalyst article of claim 7, wherein Cu is 0.01-20 wt.%, based on the weight of the first zeolite.

10. The catalyst article of any one of the preceding claims, wherein the first zeolite has a framework type selected from the group of consisting of ACO, AEI, AEN, AFN, AFT, AFX, ANA, APC, APD, AST, ASV, ATT, BCT, BEA, BEC, BOF, BOG, BRE, CAN, CDO, CFI, CGS, CHA, CHI, CON, DAC, DDR, DFT, EAB, EDI, EPI, ERI, FER, GIS, GOD, IHW, ITE, ITW, LEV, KFI, MER, MFI, MON, NSI, OWE, PAU, PHI, RHO, RTH, SAT, SAV, SIV, THO, TSC, UEI, UFI, VNI, YUG, ZON.

11. The catalyst article of claim 10, wherein the first zeolite has a framework type selected from AEI, BEA, CHA, FER, FAU, MFA, or LEV.

12. The catalyst article of any one of the preceding claims, wherein the substrate is a flow-through monolith or a wall flow filter.

13. An emission treatment system for treating a flow of a gasoline engine exhaust gas comprising the catalyst article of any one of claims 1-12.

14. The emission treatment system of claim 13, further comprising a TWC article, which is upstream of the catalyst article.

15. A method of treating an exhaust gas from a gasoline engine comprising contacting the exhaust gas with the catalyst article of any one of claims 1-12.
